# EUROPÄISCHE PATENTSCHRIFT

(11) **EP 1 260 390 B1**
(45) Veröffentlichungstag und Bekanntmachung des Hinweises auf die Patenterteilung: **20.11.2013**
(21) Anmeldenummer: 02005929.1
(22) Anmeldetag: 15.03.2002
(51) Int. Cl.: B60G 11/14, B60G 3/06, B60G 15/06, F16F 1/04

(54) **Aufhängungssystem mit einer Feder**
Suspension system with a spring
Suspension avec un ressort

(30) Priorität: 23.05.2001 DE 10125503
(43) Veröffentlichungstag der Anmeldung: 27.11.2002
(73) Patentinhaber: Muhr und Bender KG, 57439 Attendorn (DE)
(72) Erfinder: Brandt, Robert, Dipl.-Phys., 57439 Attendorn (DE); Kobelev, Vladimir, Dr., 57439 Attendorn (DE); Lebioda, Michael, 99625 Dermsdorf (DE); Neubrand, Jörg, Dipl.-Ing., 57258 Freudenberg (DE)
(74) Vertreter: Oberwalleney, Stephan

(56) Entgegenhaltungen:
- EP-A- 0 526 689
- EP-A- 0 976 591
- DE-A- 3 438 591
- US-A- 4 903 985

## Beschreibung

Die Erfindung betrifft eine Radaufhängung mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker, wobei die Schraubendruckfeder vorzugsweise so gestaltet ist, daß durch die Schraubendruckfeder Querkräfte zumindest teilweise kompensiert werden, die ohne die querkraftkompensierende Wirkung der Schraubendruckfeder am Stoßdämpfer aufträten.

Aus der gattungsbildenden US 4 903 985 A ist eine Radaufhängung mit einer Schraubendruckfeder bekannt, die in unbelasteten Zustand einen etwa S-förmigen Verlauf hat, wobei die Federmittellinie in einer oder mehr als einer Ebene gekrümmt ist.

Bei Radaufhängungen der hier grundsätzlich in Rede stehenden Art, häufig auch McPherson-Radaufhängung genannt, ist der bei ansonsten üblichen Radaufhängungen vorhandene obere Querlenker durch ein langhubiges Federbein ersetzt (siehe LUEGER "LEXIKON DER TECHNIK", Band 12 "LEXIKON DER FAHRZEUGTECHNIK", 1967 Deutsche Verlags-Anstalt GmbH, Seite 425).

Bei Radaufhängungen der Art, von der die Erfindung ausgeht, kann die Schraubendruckfeder zunächst konzentrisch zur Stoßdämpferachse angeordnet sein. Dabei muß dann die gesamte am oberen Abstützpunkt, also an der Karosserie auftretende Querkraft von der Kolbenstange des Stoßdämpfers aufgenommen werden. Das hat erhebliche Reibungskräfte am Kolben des Stoßdämpfers und infolgedessen eine ruckelnde Einfederung und Ausfederung zur Folge.

Um die auf die Kolbenstange des Stoßdämpfers wirkenden Querkräfte zu reduzieren, baut man seit längerer Zeit die Schraubendruckfeder so in das Federbein ein, daß die Federkraftwirkungslinie mit der Stoßdämpferachse einen spitzen Winkel bildet. Im Idealfall müßte der Winkel zwischen der Federkraftwirkungslinie der Schraubendruckfeder und der Stoßdämpferachse dem Winkel zwischen der Abstützwirkungslinie und der Stoßdämpferachse entsprechen. Dann wäre im normal belasteten Zustand die Kolbenstange des Stoßdämpfers weitgehend querkraftfrei. Nur beim Einfedern oder Ausfedern - um die statische Gleichgewichtslage = normal belasteter Zustand - würden Querkräfte auftreten. Im allgemeinen kann jedoch der Winkel zwischen derFederkraftwirkungslinie der Schraubendruckfeder und der Stoßdämpferachse nur kleiner als der Winkel zwischen der Abstützwirkungslinie und der Stoßdämpferachse realisiert werden, da die Durchgängigkeit des Stoßdämpfers durch die Schraubendruckfeder und eine hinreichende Freigängigkeit des Rades noch gewährleistet sein müssen.

Durch die ständige Verbreiterung der Reifen und die damit verbundene Verlagerung des Radaufstandspunktes nach außen treten immer größere Winkel zwischen der Abstützwirkungslinie und der Stoßdämpferachse auf, auf die die Federkraftwirkungslinie eingestellt werden müßte, wenn im normal belasteten Zustand die Kolbenstange des Stoßdämpfers querkraftfrei sein soll.

Da aus den dargelegten Gründen die Schraubendruckfeder in bezug auf die Stoßdämpferachse nicht so schräg gestellt werden kann, wie das eigentlich wünschenswert wäre, hat man bereits die Federkraftwirkungslinie gegenüber der Federmittellinie verschoben, und zwar durch Schrägstellung einer Endwindung oder beider Endwindungen, durch Verdickung der Endwindungen, durch Schrägstellung der Federteller oder durch Kombinationen der zuvor angesprochenen Maßnahmen. Damit ist in Grenzen erreicht worden, daß die Federkraftwirkungslinie am unteren Ende der Schraubendruckfeder weiter außen liegt als die Federmittellinie, während die Federkraftwirkungslinie und die Federmittellinie am oberen Ende der Schraubendruckfeder durch den Abstützpunkt gehen.

Da immer noch unbefriedigend gewesen ist, daß der erreichbare Winkel zwischen der Federkraftwirkungslinie und der Stoßdämpferachse noch nicht ausreicht, hat man die Schraubendruckfeder so gestaltet, daß durch die Schraubendruckfeder Querkräfte zumindest teilweise kompensiert werden, die ohne die querkraftkompensierende Wirkung der Schraubendruckfeder am Stoßdämpfer aufträten. Dazu wird verwiesen auf die deutsche Auslegeschrift 1 505 616, die eine Radaufhängung der in Rede stehenden Art mit einer Schraubendruckfeder offenbart, deren Federmittellinie im unbelasteten Zustand (unbelasteter Zustand = vor dem Einbau) einen etwa C-förmigen Verauf hat, und auf die deutsche Patentschrift 37 43 450 und die inhaltsgleiche europäische Patentschrift 0 319 651, die eine Radaufhängung der in Rede stehenden Art mit einer Schraubendruckfeder offenbaren, deren Federmittellinie im unbelasteten Zustand einen etwa S-förmigen Verlauf hat.

In der deutschen Patentschrift 37 43 450 ist das zuvor angesprochene Problem "Querkräfte am Stoßdämpfer bzw. an der Kolbenstange des Stoßdämpfers" im einzelnen beschrieben und dargestellt, nämlich zunächst in Spalte 1, Zeile 26, bis Spalte 2, Zeile 13, und in Spalte 2, Zeile 37, bis Spalte 3, Zeile 18. Beschrieben und dargestellt ist in der deutschen Patentschrift 37 43 450 auch die Maßnahme "Schraubendruckfeder, deren Federmittellinie im unbelasteten Zustand einen etwa C-förmigen Verlauf hat", nämlich in Spalte 2, Zeilen 14 bis 19, und in Spalte 3, Zeilen 19 bis 35, unter Bezugnahme auf Fig. 5. In der deutschen Patentschrift 37 43 450 ist insbesondere auch die Maßnahme "Schraubendruckfeder, deren Federmittellinie im unbelasteten Zustand einen etwa S-förmigen Verlauf hat" beschrieben und dargestellt, und zwar in Spalte 3, Zeilen 42 bis 64, und in Spalte 4, Zeilen 1 bis 29, unter Bezugnahme auf Fig. 6. Die Maßnahme "Schraubendruckfeder, deren Federmittellinie im unbelasteten Zustand einen etwa S-förmigen Verlauf hat" ist das, was die deutsche Patentschrift 37 43 450, ausgehend von dem im einzelnen beschriebenen Stand der Technik, lehrt, - als weiterer Beitrag zur Lösung der aufgezeigten Problematik "Querkräfte am Stoßdämpfer bzw. an der Kolbenstange des Stoßdämpfers". Radaufhängungen, die von der Lehre der deutschen Patentschrift 37 43 450 Gebrauch machen, die also eine Schraubendruckfeder aufweisen, deren Federmittellinie im unbelasteten Zustand einen etwa S-förmigen Verlauf hat, haben sich bereits millionenfach bewährt und gewinnen zunehmend an Bedeutung.

Einleitend ist ausgeführt, daß die Erfindung eine Radaufhängung betrifft, zu der u. a. eine Schraubendruckfeder gehört und wobei die Schraubendruckfeder vorzugsweise so gestaltet ist, daß durch die Schraubendruckfeder Querkräfte zumindest teilweise kompensiert werden, die ohne die querkraftkompensierende Wirkung der Schraubendruckfeder am Stoßdämpfer aufträten. Mit "wobei die Schraubendruckfeder so gestaltet ist, daß durch die Schraubendruckfeder Querkräfte zumindest teilweise kompensiert werden, ...................." sind vor allem - aber keinesfalls ausschließlich - die zuvor im einzelnen beschriebenen Maßnahmen "Schraubendruckfeder, deren Federmittellinie im unbelasteten Zustand einen etwa C-förmigen Verlauf hat" und "Schraubendruckfeder, deren Federmittellinie im unbelasteten Zustand einen etwa S-förmigen Verlauf hat" gemeint. Diese Maßnahmen nehmen Bezug auf die Federmittellinien von Schraubendruckfedem. Einerseits sind bei Schraubendruckfedern Federmittellinien natürlich nicht körperlich vorhanden; körperlich vorhanden sind nur die einzelnen Federwindungen bzw. ist nur die Gesamtheit der Federwindungen. Andererseits gibt es, soweit bekannt, keine Definition für die Federmittellinien von Schraubendruckfedern. Deshalb soll nachfolgend dargestellt werden, wie einerseits die Federmittellinien von Schraubendruckfedern ermittelt werden können, worauf es andererseits ankommt, wenn auf die Federmittellinien von Schraubendruckfedern Bezug genommen wird.

Ein erstes Verfahren zur Ermittlung der Federmittellinien von Schraubendruckfedern ist dadurch gekennzeichnet, daß zunächst der Hüllmantel der Schraubendruckfeder konstruiert wird und daß dann aus dem konstruierten Hüllmantel die Hüllmantelmittellinie ermittelt wird, die mit der Federmittellinie gleichgesetzt wird. Dieses Verfahren ist allenfalls eingeschränkt anwendbar; es versagt insbesondere dort, wo Federwindungen mit sich änderndem Windungsdurchmesser vorliegen. Ein weiteres Verfahren zur Bestimmung der Federmittellinie von Schraubendruckfedern ist dadurch gekennzeichnet, daß aus dem arithmetischen Mittel der Windungspunkte jeweils Mittelpunkte der Federwindung bestimmt werden und daß die Verbindung der so bestimmten Mittelpunkte der Federwindungen die Federmittellinie darstellt. Schließlich kann die Federmittellinie von Schraubendruckfedern auch dadurch bestimmt werden, daß die Projektionen der einzelnen Federwindungen in einer Ebene betrachtet werden, daß als Mittelpunkt jeder Federwindung der Mittelpunkt eines Kreises angenommen wird, der an die Federwindung angenähert ist, und daß die so gewonnenen Mittelpunkte der Federwindungen miteinander verbunden werden.

Wenn auf die Federmittellinien von Schraubendruckfedern Bezug genommen wird, dann kommt es darauf an, welche Bedeutung die Federmittellinien für die Federkraftwirkungslinien von Schraubendruckfedern haben. Hat eine Schraubendruckfeder eine gerade Federmittellinie, so fällt die Federkraftwirkungslinie, die natürlich stets eine Gerade ist, mit der Federmittellinie zusammen. Bei einer Schraubendruckfeder, deren Federmittellinie einen etwa C-förmigen Verlauf hat, ist - im eingebauten Zustand ! - die Federkraftwirkungslinie gegenüber der - im eingebauten Zustand - gerade verlaufenden Federmittellinie verschoben (vgl. Fig. 5 der deutschen Patentschrift 37 43 450). Demgegenüber gilt für eine Schraubendruckfeder, deren Federmittellinie im unbelasteten Zustand einen etwas S-förmigen Verlauf hat, daß im eingebauten Zustand die Federkraftwirkungslinie zur - im eingebauten Zustand gerade verlaufenden - Federmittellinie unter einem spitzen Winkel verläuft (vgl. Fig. 6 der deutschen Patentschrift 37 43 450).

Im übrigen sei noch auf folgendes hingewiesen:

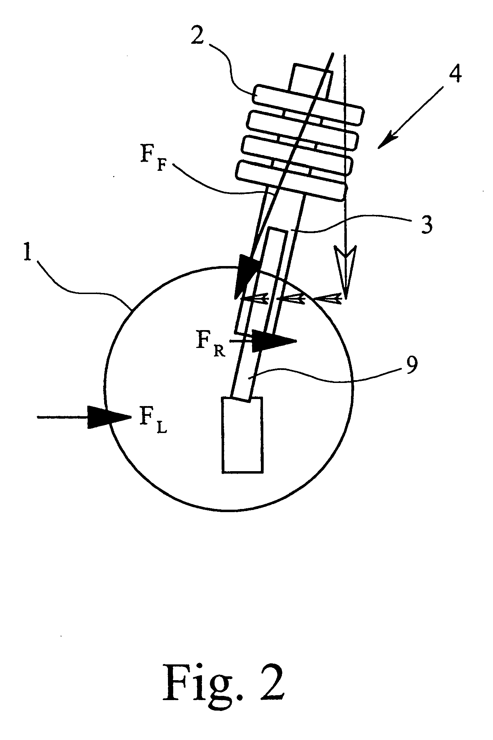

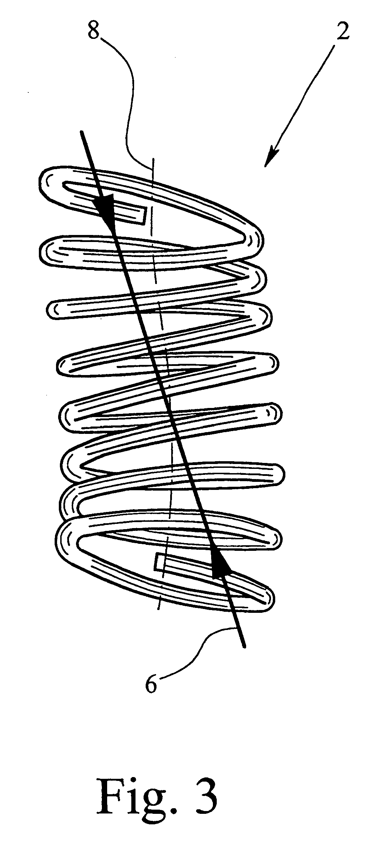

Unter Berücksichtigung dessen, was zuvor in bezug auf die Federkraftwirkungslinien von Schraubendruckfedern ausgeführt worden ist, liegt ein etwa C-förmiger Verlauf der Federmittellinie auch dann vor, wenn die Endwindungen der Schraubendruckfeder gegensinnig geneigt sind, der mittlere Teil der Schraubendruckfeder jedoch gerade verläuft (vgl. in der deutschen Auslegeschrift 1 505 616 die Schraubendruckfeder nach Fig. 2, die gleichwirkend ist zur Schraubendruckfeder nach Fig. 3). Das, was mit einer Schraubendruckfeder erreicht werden kann, deren Federmittellinie im unbelasteten Zustand einen etwa S-förmigen Verlauf hat, kann auch dadurch erreicht werden, daß - bei einem im übrigen geraden Verlauf der Federmittellinie - die Endwindungen der Schraubendruckfeder gleichsinnig geneigt sind. Schließlich kann das, was mit einer Schraubendruckfeder erreicht wird, deren Federmittellinie im unbelasteten Zustand einen etwa S-förmigen Verlauf hat, auch durch eine Schraubendruckfeder erreicht werden, deren Federmittellinie teilweise einen etwa C-förmigen Verlauf hat und deren dem C-förmigen Teil ferne Endwindung gegensinnig geneigt ist.

Neben dem zuvor im einzelnen beschriebenen Problem "Querkräfte am Stoßdämpfer bzw. an der Kolbenstange des Stoßdämpfers" gibt es bei Radaufhängungen der in Rede stehenden Art noch ein anderes Problem. Im System wirkende Kräfte und Momente verursachen nämlich eine zusätzliche Belastung an der Lenkung, die für die Lenkung eine destabilisierende Wirkung hat, bedingt durch die elastische Nachgiebigkeit des Systems, was sich aus folgendem ergibt:

In dem hier in Rede stehenden System wirken als Kräfte
a) die Radaufstandskraft, deren Richtung senkrecht zur Radaufstandsebene verläuft,
b) die Lenkerkraft, die in der Ebene des Querlenkers verläuft und durch den unteren Lagerpunkt geht, und
c) die Schraubendruckfederkraft, die in der Hauptbelastungsebene liegen sollte, wobei die Hauptbelastungsebene durch den oberen Lagerpunkt, durch den unteren Lagerpunkt und durch den Radaufstandspunkt bestimmt ist.

Liegt die Schraubendruckfederkraft nicht in der Hauptbelastungsebene, entsteht eine Reaktionskraft in Fahrtrichtung. Wäre der Querlenker absolut starr, so würde die in Fahrtrichtung wirkende Komponente der Schraubendruckfederkraft vom Querlenker aufgefangen. In Wirklichkeit ist die Radaufhängung jedoch insgesamt elastisch; der Querlenker und die Lenkung sind verformbar. Die in Fahrtrichtung wirkende Komponente der Schraubendruckfederkraft wird deshalb lediglich teilweise durch den Querlenker aufgefangen, teilweise wirkt sie in die Lenkung.

Üblicherweise gilt, daß die Antriebskräfte an der linken Fahrzeugseite und an der rechten Fahrzeugseite gleich groß sind, während die Reaktionskräfte, also die in Fahrtrichtung wirkenden Komponenten der Schraubendruckfederkraft, an den beiden Fahrzeugseiten üblicherweise unterschiedlich groß sind. Die Differenz zwischen den in Fahrtrichtung wirkenden Komponenten der Schraubendruckfederkräfte an der linken Fahrzeugseite und an der rechten Fahrzeugseite ist mit einer unterschiedlichen Neigung der Federkraftwirkungslinie infolge des Taumelns der Schraubendruckfederkraft zu erklären. Die Differenz zwischen den in Fahrtrichtung wirkenden Komponenten der Schraubendruckfederkräfte an der linken Fahrzeugseite und an der rechten Fahrzeugseite trägt dazu bei, daß in der Lenkung ein unerwünschtes, destabilisierendes Lenkmoment entsteht. Unter der Wirkung dieses destabilisierenden Lenkmoments wandert das Fahrzeug einseitig von der geraden Fahrt ab.

Der Erfindung liegt nun die Aufgabe zugrunde, bei dem in Rede stehenden System dafür Sorge zu tragen, daß die in die Lenkung eingeleitete Kraft, die aus der Differenz zwischen den in Fahrtrichtung wirkenden Komponenten der Schraubendruckfederkräfte an der linken Fahrzeugseite und der rechten Fahrzeugseite resultiert, zu reduzieren bzw. zu minimieren.

Diese Aufgabe wird durch die Merkmale des Anspruchs 1 gelöst. Eine bevorzugte Ausgestaltung ist gegenstand des Unteranspruchs.

Die erfindungsgemäße Radaufhängung, bei der die zuvor hergeleitete und aufgezeigte Aufgabe gelöst ist, ist nun zunächst und im wesentlichen dadurch gekennzeichnet, daß die Schraubendruckfeder so gestaltet ist, daß die Federkraftwirkungslinie windschief zur Stoßdämpfermittellinie verläuft. Dazu folgendes:

Die senkrecht zur Fahrzeuglängsrichtung verlaufenden Ebenen seien mit XZ-Ebenen, die in Fahrzeuglängsrichtung verlaufenden Ebenen mit YZ-Ebenen bezeichnet. Davon ausgehend, soll mit einem windschiefen Verlauf der Federkraftwirkungslinie zur Stoßdämpfermittellinie gemeint sein, daß einerseits die Federkraftwirkungslinie schief zur Projektion der Federmittellinie an der XZ-Ebene, andererseits schief zur Projektion der Federmittellinie an der YZ-Ebene verläuft. (Projektion der Federmittellinie meint dabei immer die Projektion der Federmittellinie der eingebauten Schraubendruckfeder.) Dadurch, daß die Federkraftwirkungslinie schief zur Projektion der Federmittellinie an der XZ-Ebene verläuft, werden ansonsten auftretende Querkräfte am Stoßdämpfer bzw. an der Kolbenstange des Stoßdämpfers reduziert, während der Verlauf der Federkraftwirkungslinie schief zur Projektion der Federmittellinie an der YZ-Ebene die Kräfte reduziert bzw. minimiert bzw. eliminiert, die aus der Differenz zwischen den in Fahrtrichtung wirkenden Komponenten der Schraubendruckfederkräfte an der linken Fahrzeugseite und an der rechten Fahrzeugseite resultieren. Die dadurch, daß die Federkraftwirkungslinie annähernd schief zur Projektion der Federmittellinie an der YZ-Ebene verläuft, auftretenden Kräfte kompensieren zumindest teilweise die unerwünschten, destabilisierenden Kräfte, die ansonsten in die Lenkung geleitet werden, resultierend aus der Differenz zwischen den in Fahrtrichtung wirkenden Komponenten der Schraubendruckfederkräfte an der linken Fahrzeugseite und an der rechten Fahrzeugseite, wodurch die Geradeausfahrt des Fahrzeugs verbessert bzw. gewährleistet wird.

Im einzelnen gibt es nun eine Mehrzahl von Möglichkeiten, die erfindungsgemäße Radaufhängung auszugestalten und weiterzubilden. Dazu wird verwiesen auf die dem Patentanspruch 1 nachgeordneten Patentansprüche und auf die Beschreibung eines bevorzugten Ausführungsbeispiels in Verbindung mit der Zeichnung. In der Zeichnung zeigen
- Fig. 1: eine schematische Darstellung zu einer erfindungsgemäßen Radaufhängung, in Fahrzeuglängsrichtung gesehen,
- Fig. 2: eine schematische Darstellung zu einer erfindungsgemäßen Radaufhängung, senkrecht zur Fahrzeuglängsrichtung gesehen, also von einer Fahrzeugseite aus,
- Fig. 3: eine Ansicht einer zu der erfindungsgemäßen Radaufhängung gehörenden Schraubendruckfeder, in Fahrzeuglängsrichtung gesehen, und
- Fig. 4: eine Ansicht der Schraubendruckfeder nach Fig. 3, senkrecht zur Fahrzeuglängsrichtung gesehen, also von einer Fahrzeugseite.

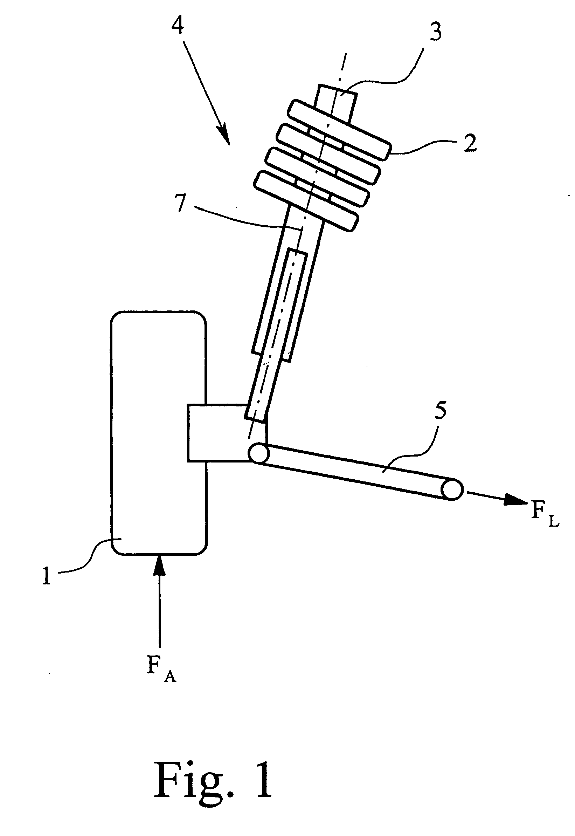

Zu der in den Fig. 1 und 2 nur schematisch dargestellten bzw. angedeuteten Radaufhängung gehören ein einerseits mit der - nicht dargestellten - Karosserie und andererseits mit dem Rad 1 verbundenes, eine Schraubendruckfeder 2 und einen Stoßdämpfer 3 aufweisendes Federbein 4 sowie ein Querlenker 5.

In den Fig. 1 und 2 sind die in dem hier in Rede stehenden System wirkenden Kräfte angedeutet, nämlich
a) die Radaufstandskraft F_{A}, deren Richtung senkrecht zur Radaufstandsebene verläuft,
b) die Lenkerkraft F_{L}, die in der Ebene des Querlenkers 5 verläuft und durch den unteren Lagerpunkt geht, und
c) die Schraubendruckfederkraft F_{F}, die in der Hauptbelastungsebene liegen sollte, wobei die Hauptbelastungsebene durch den oberen Lagerpunkt, durch den unteren Lagerpunkt und durch den Radaufstandspunkt bestimmt ist.

Liegt die Schraubendruckfederkraft F_{F} nicht in der Hauptbelastungsebene, entsteht eine Reaktionskraft R_{F} in Fahrtrichtung. Wäre der Querlenker 5 absolut starr, so würde die in Fahrtrichtung wirkende Komponente der Schraubendruckfederkraft F_{F} vom Querlenker 5 aufgenommen. In Wirklichkeit ist die Radaufhängung jedoch insgesamt elastisch; der Querlenker 5 und die im einzelnen nicht dargestellte Lenkung sind verformbar. Die in Fahrtrichtung wirkende Komponente der Schraubendruckfederkraft F_{F}, die Reaktionskraft R_{F}, wird deshalb lediglich teilweise durch den Querlenker 5 aufgefangen, teilweise wirkt sie in die Lenkung.

Erfindungsgemäß ist nun dafür Sorge getragen, daß die in die Lenkung eingeleitete Kraft, die aus der Differenz zwischen den in Fahrtrichtung wirkenden Komponenten der Schraubendruckfederkräfte F_{F}, also der Reaktionskräfte R_{F}, an der linken Fahrzeugseite und der rechten Fahrzeugseite resultiert, reduziert bzw. minimiert ist, und zwar dadurch daß die Schraubendruckfeder 2 so gestaltet ist, daß die Federkraftwirkungslinie 6 windschief zur Stoßdämpfermittellinie 7 verläuft.

Bezeichnet man die senkrecht zur Fahrzeuglängsrichtung verlaufenden Ebenen mit XZ-Ebenen, die in Fahrzeuglängsrichtung verlaufenden Ebenen mit YZ-Ebenen, so ist mit einem windschiefen Verlauf der Federkraftwirkungslinie 6 zur Stoßdämpfermittellinie 7 gemeint, daß einerseits die Federkraftwirkungslinie 6 schief zur Projektion der Federmittellinie 8 an der XZ-Ebene, andererseits schief zur Projektion der Federmittellinie 8 an der YZ-Ebene verläuft. Dadurch, daß die Federkraftwirkungslinie 6 schief zur Projektion der Federmittellinie 8 an der XZ-Ebene verläuft, werden ansonsten auftretende Querkräfte am Stoßdämpfer 3 bzw. an der Kolbenstange 9 des Stoßdämpfers 3 reduziert, während der Verlauf der Federkraftwirkungslinie 6 schief zur Projektion der Federmittellinie 8 an der YZ-Ebene die Kräfte reduziert bzw. minimiert bzw. eliminiert, die aus der Differenz zwischen den in Fahrtrichtung wirkenden Komponenten der Schraubendruckfederkräfte F_{F} an der linken Fahrzeugseite und an der rechten Fahrzeugseite resultieren. Die dadurch, daß die Federkraftwirkungslinie 6 annähernd schief zur Projektion der Federmittellinie 8 an der YZ-Ebene verläuft, auftretenden Kräfte kompensieren zumindest teilweise die unerwünschten destabilisierenden Kräfte, die ansonsten in die Lenkung geleitet werden, resultierend aus der Differenz zwischen den in Fahrtrichtung wirkenden Komponenten der Schraubendruckfederkräfte F_{F}, also der Reaktionskräfte R_{F}, an der linken Fahrzeugseite und an der rechten Fahrzeugseite, wodurch die Geradeausfahrt des Fahrzeugs verbessert bzw. gewährleistet ist.

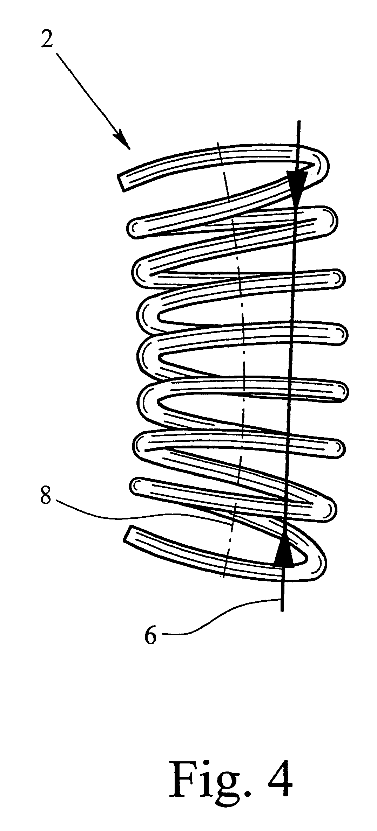

Bei einem bevorzugten Ausführungsbeispiel der erfindungsgemäßen Radaufhängung, zu dem die Fig. 3 und 4 gehören, hat die Federmittellinie 8 der Schraubendruckfeder 2 im unbelasteten Zustand einerseits einen etwa S-förmigen Verlauf, andererseits einen etwa C-förmigen Verlauf, - und zwar so, daß einerseits die Federkraftwirkungslinie 6 schief zur Projektion der Federmittellinie 8 an der XZ-Ebene, andererseits schief zur Projektion der Federmittellinie 8 an der YZ-Ebene verläuft. Dadurch, daß die Federmittellinie 8 der Schraubendruckfeder 2 im unbelasteten Zustand einen etwa S-förmigen Verlauf hat und die Federkraftwirkungslinie 6 schief zur Projektion der Federmittellinie 8 an der XZ-Ebene verläuft, werden ansonsten auftretende Querkräfte am Stoßdämpfer 3 bzw. an der Kolbenstange 9 des Stoßdämpfers 3 reduziert. Dadurch, daß die Federmittellinie 8 der Schraubendruckfeder 2 im unbelasteten Zustand - auch - einen etwa C-förmigen Verlauf hat und die Federkraftwirkungslinie 6 schief zur Projektion der Federmittellinie 8 an der YZ-Ebene verläuft, werden ansonsten auftretende Kräfte reduziert bzw. minimiert bzw. eliminiert, die aus der Differenz zwischen den in Fahrtrichtung wirkenden Komponenten der Schraubendruckfederkräfte F_{F}, also der Reaktionskräfte R_{F}, an der linken Fahrzeugseite und an der rechten Fahrzeugseite resultieren.

Einleitend ist ausgeführt, daß bei der in Rede stehenden Radaufhängung die Schraubendruckfeder 2 vorzugsweise so gestaltet ist, daß durch die Schraubendruckfeder 2 Querkräfte zumindest teilweise kompensiert werden, die ohne die querkraftkompensierende Wirkung der Schraubendruckfeder 2 am Stoßdämpfer 3 aufträten. Im Ausführungsbeispiel ist die Schraubendruckfeder 2, wie zuvor dargestellt, so ausgeführt, daß die Federmittellinie 8 im unbelasteten Zustand einen etwa S-förmigen Verlauf hat. Damit ist bei dem dargestellten Ausführungsbeispiel der erfindungsgemäßen Radaufhängung auch die Lehre verwirklicht, die sich aus der deutschen Patentschrift 37 43 450 ergibt. Statt der Maßnahme "S-förmiger Verlauf der Federmittellinie 8 der Schraubendruckfeder 2" oder zusätzlich dazu, können auch die Maßnahmen verwirklicht sein, mit denen im Stand der Technik bereits versucht worden ist, die in Rede stehende Querkraftkompensation zu realisieren, wozu auf die einleitenden Ausführungen verwiesen wird.

Im dargestellten Ausführungsbeispiel weist die Federmittellinie 8 der Schraubendruckfeder 2, wie dies in Fig. 4 dargestellt ist, auch einen etwa C-förmigen Verlauf auf, wodurch die in die Lenkung eingeleitete Kraft, die aus der Differenz zwischen den in Fahrtrichtung wirkenden Komponenten der Schraubendruckfederkräfte F_{F}, also der Reaktionskräfte R_{F}, an der linken Fahrzeugseite und der rechten Fahrzeugseite resultiert, reduziert bzw. minimiert bzw. eliminiert wird. Statt die Schraubendruckfeder 2 so zu gestalten, daß die Federmittellinie 8 im unbelasteten Zustand einen etwa C-förmigen Verlauf hat, kann auch insoweit eine Schraubendruckfeder 2 verwendet sein, deren Federmittellinie im unbelasteten Zustand einen etwa S-förmigen Verlauf hat.

## Patentansprüche

1. Radaufhängung mit einem einerseits mit der Karosserie und andererseits mit dem Rad verbundenen, eine Schraubendruckfeder und einen Stoßdämpfer aufweisenden, radführenden Federbein und mit einem Querlenker, wobei die Schraubendruckfeder so gestaltet ist, daß durch die Schraubendruckfeder Querkräfte zumindest teilweise kompensiert werden, die ohne die querkraftkompensierende Wirkung der Schraubendruckfeder am Stoßdämpfer aufträten, wobei die Schaubendruckfeder (2) so gestaltet ist, daß die Federkraftwirkungslinie (6) der eingebauten Schraubendruckfeder (2) windschief zur Stoßdämpfermittellinie (7) verläuft, **dadurch gekennzeichnet, daß** zur zumindest teilweisen Reduzierung der in die Lenkung eingeleiteten Kraft, die aus der Differenz zwischen den in Fahrtrichtung wirkenden Komponenten der Schraubendruckfederkräfte (F_{F}), der Reaktionskräfte (R_{F}), an der linken Fahrzeugseite und der rechten Fahrzeugseite resultiert, die Federmittellinie (8) der Schraubendruckfeder (2) im unbelasteten Zustand in Projektion an einer Fahrzeuglängsebene einen etwa C-förmigen oder einen etwa S-förmigen Verlauf hat.

2. Radaufhängung nach Anspruch 1, **dadurch gekennzeichnet, daß** zur zumindest teilweisen Kompensation der ansonsten am Stoßdämpfer (3) bzw. an der Kolbenstange (9) des Stoßdämpfers (3) auftretenden Querkräfte die Federmittellinie (8) der Schraubendruckfeder (2) im unbelasteten Zustand einen etwa S-förmigen in Projektion an einer Fahrzeugquerebene Verlauf hat.

## Claims

1. Wheel suspension with a wheel-guiding suspension strut and with a control arm, which suspension strut being connected at one end to the body and on the other end to the wheel and having a helical compression spring and a shock absorber, wherein the helical compression spring is formed such, that the helical compression spring compensates at least partially transversal forces, which would otherwise occur on the shock absorber without the transversal force compensating effect of the helical compression spring, wherein the helical compression spring (2) is formed such, that the spring action line (6) of the mounted helical compression spring (2) extends skewed to the shock absorber centre line (7),
**characterised in that** for at least a partial reduction of the force introduced into the steering system, which results from the difference between the components of the helical compression spring forces (F_{F}) effective in driving direction, the reaction forces (R_{F}), on the left side of the vehicle and on the right side of the vehicle, the spring centre line (8) of the helical compression spring (2) has in the unloaded condition, in projection on a vehicle longitudinal plane, a generally C-like or a generally S-like extension.

2. Wheel suspension according to claim 1,
**characterised in**
**that** for at least partial compensation of the transversal forces, which otherwise would occur on the shock absorber (3), respectively on the piston rod (9) of the shock absorber (3), the centre line (8) of the helical compression spring (2) has in the unloaded condition, in projection on a transversal vehicle plane, a generally S-like extension.

## Revendications

1. Suspension de roue comprenant une jambe de suspension guidant la roue, qui est reliée d'un côté à la carrosserie et de l'autre côté à la roue, et qui présente un ressort de compression hélicoïdal et un amortisseur, et comprenant également une biellette transversale, suspension de roue
dans laquelle le ressort de compression hélicoïdal est configuré de manière à ce que ce ressort de compression hélicoïdal compense au moins partiellement des forces transversales, qui apparaîtraient sur l'amortisseur sans l'action de compensation de forces transversales du ressort de compression hélicoïdal, et
dans laquelle le ressort de compression hélicoïdal (2) est par ailleurs configuré de manière à ce que la ligne d'action de la force de ressort (6) du ressort de compression hélicoïdal (2) implanté, s'étende de façon gauche par rapport à l'axe central (7) de l'amortisseur, **caractérisée en ce que** pour une réduction au moins partielle de la force induite dans la direction, qui résulte de la différence entre les composantes, agissant dans la direction de marche, des forces du ressort de compression hélicoïdal (F_{F}), des forces de réaction (R_{F}), sur le côté gauche du véhicule et le côté droit du véhicule, l'axe central de ressort (8) du ressort de compression hélicoïdal (2) présente dans l'état non chargé, en projection sur un plan longitudinal du véhicule, un tracé environ en forme de C ou environ en forme de S.

2. Suspension de roue selon la revendication 1, **caractérisée en ce que** pour la compensation au moins partielle des forces transversales apparaissant sinon au niveau de l'amortisseur (3), à savoir au niveau de la tige de piston (9) de l'amortisseur (3), l'axe central de ressort (8) du ressort de compression hélicoïdal (2) présente dans l'état non chargé, en projection sur un plan transversal du véhicule, un tracé environ en forme de S.
